# EUROPÄISCHE PATENTANMELDUNG

(11) **EP 0 613 090 A1**
(43) Veröffentlichungstag der Anmeldung: **31.08.1994**
(21) Anmeldenummer: 93103126.4
(22) Anmeldetag: 26.02.1993
(51) Int. Cl.: G06F 12/14

(54) **Verfahren zur Prüfung der Zulässigkeit von direkten Speicherzugriffen in Datenverarbeitungsanlagen**

(71) Anmelder: Siemens Nixdorf Informationssysteme Aktiengesellschaft, D-33102 Paderborn (DE)
(72) Erfinder: Schlimm, Georg, Dipl.-Ing., W-8028 Taufkirchen (DE)
(74) Vertreter: Fuchs, Franz-Josef, Dr.-Ing.

(57) **Zusammenfassung**

Bei Vorabaufbereitung eines Kanalprogramms durch eine der Prozessoreinheiten (PROC) einer Datenverarbeitungsanlage werden die Adressen für die Kanalbefehlswörter (CCW) und die Datentabellen bei indirekter Adressierung (CCW-AD, IDAW-AD) sowie die im Arbeitsspeicher (MM) im zu hinterlegenden aufbereiteten Kanalprogramm enthaltenen Datentransferadressen (DAT-AD) unmittelbar vor ihrer Bereitstellung durch eine in den Aufbereitungsprogrammlauf integrierte Prüfung daraufhin überwacht, ob die durch die jeweils reale Speicheradresse gekennzeichneten Daten im verschieden konfigurierbaren physikalischen Arbeitsspeicher (MM) vorhanden sind. Zu diesem Zweck enthält ein Teil (AORS) des Mikroprogrammspeichers (CM) den physikalischen Adressen der einzelnen 4-KByte-Seiten oder Gruppen davon zugeordnete Einträge, die ausgehend von einer Basisadresse (AOR-BAD) und einer von Adressenbits der zu prüfenden Adresse (CCW-AD, IDAW-AD, DAT-AD) abgeleiteten Distanz (X...) adressierbar sind und durch an entsprechender Stelle des Aufbereitungsprogramms eingefügte Verzweigungsbefehle (JIND) angesteuert werden. Ist gemaß dem Eintrag (RETURN) die Adresse zulässig, wird das Aufbereitungsprogramm fortgesetzt. Im anderen Falle (GOTO ERROR) wird in eine Fehlerroutine (ERROR) übergeleitet.

## Beschreibung

Die Erfindung betrifft ein Verfahren zur Prüfung der Zulässigkeit von direkten Speicherzugriffen in Datenverarbeitungsanlagen mit verschieden konfigurierbarem Arbeitsspeicher gemaß dem Oberbegriff des Patentanspruches 1.

Moderne Datenverarbeitungsanlagen arbeiten in der Regel mit mehreren Speicherebenen. Die höchste logische Speicherebene bildet dabei der virtuelle Adreßraum, der in gleichgroße Bereiche von z.B. 4-KByte-Seiten unterteilt ist. Darunter folgt die auf den Arbeitsspeicher bezogene reale Speicherebene mit einem kleineren realen Adreßraum in Form von linear aufsteigenden Adressen, wobei der Adreßraum in der Größe der Seiten des virtuellen Adreßraumes entsprechende Rahmen unterteilt ist. Da der physikalische Speicher aber kein einteiliger Speicher ist, sondern aus Speicherbausteinen zu Speicherelementen und -modulen zusammengesetzt ist, die bei überlappender Speicherung parallel ansteuerbar und verschieden konfigurierbar sind, ist zusätzIich eine Abbildung der realen Adressen auf die des physikalischen Arbeitsspeichers erforderlich.

Während die virtuelle Adresse in der Regel anhand von Adreßübersetzungstabellen in sich bekannterweise programmgesteuert in eine reale Adresse umgesetzt wird, erfolgt die Umsetzung der realen Adressen in physikalische Adressen in der Regel mit Hilfe eines gesonderten Speichers in der Zugriffssteuereinheit des Arbeitsspeichers beim jeweiligen Zugriff. Mit der Umsetzung ist zugleich auch eine Überprüfung gekoppelt, die Auskunft gibt, ob eine durch eine reale Adresse gekennzeichnete Datenseite im physikalischen Speicher vorhanden ist, denn es könnten Speicherelemente oder - module auskonfiguriert sein, so daß der physikalische Adreßraum gegenüber dem realen Adreßraum eingeschränkt ist oder Lücken aufweist ("out-of-range"-Prüfung). Dabei wird in der Regel nicht jede reale Seitenadresse überprüft, sondern abhängig von vorbestimmten Adressenbits gebildete Gruppen von zusammenhängenden Seiten als Datenblock, wobei jeder Datenblock einem der einzeln konfigurierbaren Speicherelemente zugeordnet wird. Das verringert den Aufwand für den gesonderten Speicher zur Adreßumsetzung und Prüfung auf Zulässigkeit des direkten Speicherzugriffs.

Bei Datenverarbeitungsanlagen, bei denen die Aufbereitung der jeweils aus einer Folge von Kanalbefehlswörtern bestehenden Kanalprogramme für das Ein-/Ausgabesystem der Datenverarbeitungsanlage jeweils vor der eigentlichen Ausführung des jeweiligen Kanalprogramms erfolgt und die aufbereitete Befehlskette bis zur endgültigen Ausführung zwischengespeichert wird, kann die Zulässigkeit der während des Kanalprogrammlaufs zu verwedenden Speicheradressen für den Datenverkehr mit den bisherigen Mitteln der Speicherzugriffssteuerung nicht geprüft werden, da während der Aufbereitung noch keine, den Datentransferadressen entsprechenden Speicherzugriffe erfolgen. Diese Prüfung müßte von dem die Kanalbefehlswörter eines Kanalprogramms im voraus aufbereitenden Prozessor gesondert durchgeführt werden, damit die Aufbereitung des Kanalprogramms rechtzeitig abgebrochen werden kann, wenn zu Daten einer vorgegebenen realen Adresse nicht zugegriffen werden kann und damit das aufbereitete Kanalprogramm nicht ausführbar wäre

Dem Aufbereitungsprozessor müßte daher in ähnlicher Weise wie in der Speicherzugriffssteuerung ein gesonderter Speicher für die Zulässigkeitsprüfung zur Verfügung stehen, damit unmittelbar mit der Aufbereitung eines jeden Kanalbefehlswortes die zugehörige Datentransferadresse überprüft werden kann. Das erfordert bei einem eigenständigen Speicherbaustein zusätzliche Verdrahtung auf der Baugruppe mit größeren Laufzeiten und bei einem in einen komplexen Schaltkreisbaustein integrierten Speicher erweiterte Testprogramme bei höherer Komplexität.

Gemäß den kennzeichnend Merkmalen des Patentanspruches 1 umgeht die Erfindung die aufgezeigten Schwierigkeiten. Danach wird die Zulässigkeitsprüfung kosten- und aufwandssparend in den Mikrobefehlslauf für die Aufbereitung der Kanalbefehlswörter integriert, indem ein Teil des vorhandenen Mikroprogrammspeichers im steuernden Prozessor als Speicher für die Abbildungsprüfung herangezogen wird und indem die den einzelnen Speicherseiten zugeordneten Einträge im Rahmen einer Programmverzweigung angesteuert werden. Der jeweils angesteuerte Eintrag entscheidet dann, ob der jeweilige Programmlauf zur Aufbereitung eines Kanalbefehlswortes fortgesetzt oder aber in eine Fehlerroutine übergeleitet wird.

Einzelheiten der Erfindung seien nachfolgend anhand eines in der Zeichnung dargestellten Ausführungsbeispieles erläutert. Im einzelnen zeigen
Figur 1 das Blockschaltbild einer Datenverarbeitungsanlage mit einem gemäß der Erfindung arbeitenden Ein-/Ausgabeprozessor,
Figur 2 die Belegung des Mikroprogrammspeichers des Ein-/Ausgabeprozessors von Figur 1 mit Einträgen gemäß der Erfindung und
Figur 3 die Belegung eines Teiles eines Registerspeichers mit dem jeweiligen Kanalbefehlswort und den benötigten Adressen zur Ableitung der Ansteueradresse für die Einträge im Mikroprogrammspeicher.

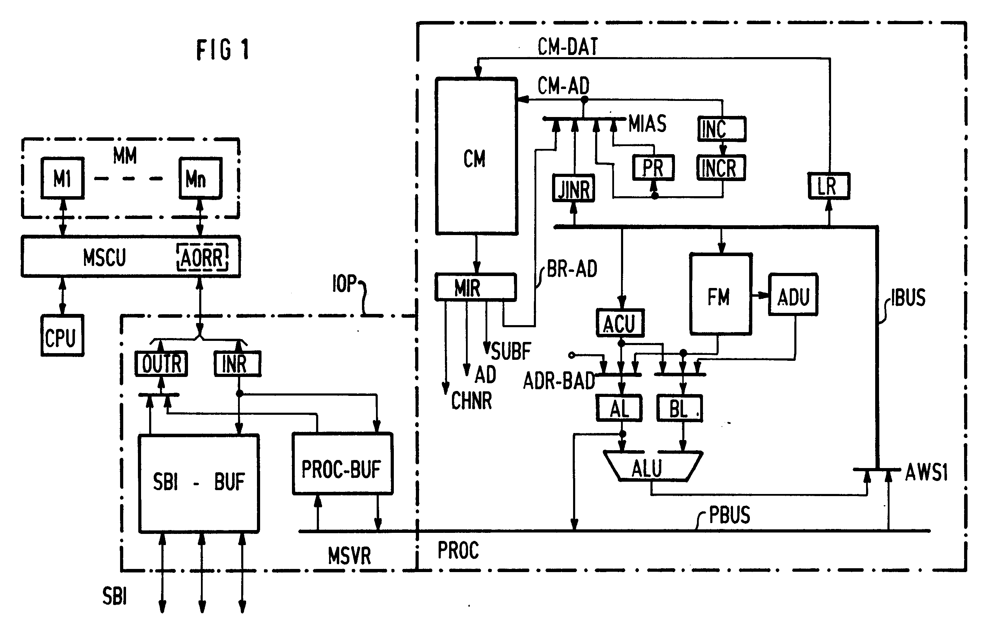

Das Blockschaltbild von Figur 1 zeigt den strukturellen Aufbau einer Datenverarbeitungsanlage mit einem aus mehreren Modulen M... bestehenden Arbeitsspeicher MM und einer Speicherzugriffsssteuereinheit MSCU, die den Zugriff der angeschlossenen Verarbeitungsprozessoren CPU und Ein-/Ausgabeprozessoren IOP zum Arbeitsspeicher MM steuert.

Der Ein-/Ausgabeprozessor IOP ist in zwei Funktionseinheiten gegliedert, nämlich in die eigentliche Prozessoreinheit PROC und in die Datenpfadsteuerung MSVR. Letztere steuert autonom die Arbeitsspeicherzugriffe über die Speicherzugriffssteuereinheit MSCU sowohl für die Prozessoreinheit PROC als auch für alle über die Schnittstellen SBI erreichbaren Steuereinheiten für die Kanäle des Ein-/Ausgabesystems, während die Prozessoreinheit PROC in an sich bekannter Weise den Verkehr über nicht dargestellte Schnittstellen mit den anderen Prozessoren der Datenverarbeitungsanlage steuert und im Rahmen der Bearbeitung von Kanalprogrammen der Datenpfadsteuerung Aufträge für Zugriffe zum Arbeitsspeicher MM oder zur Ansteuerung einer der über die Schnittstellen SBI angeschlossenen Steuereinheiten für die Kanäle erteilt.

Von den Steuereinrichtungen der Datenpfadsteuerung MSVR sind lediglich die für den Datenfluß notwendigen Einrichtungen gezeigt, nicht aber die für die Steuerung der Arbeitsabläufe in der Datenpfadsteuerung. Dargestellt sind daher nur die Schnittstellenregister INR bzw. OUTR für ankommende bzw. abgehende Daten an der Schnittstellle zur Speicherzugriffssteuereinheit MSCU und daran angeschlossene Pufferspeicheranordnungen SBI-BUF für den Verkehr mit den über die Schnittstellen SBI erreichbaren Steuereinheiten und PROC-BUF für den Verkehr mit der über das Leitungssystem PBUS angeschlossenen Prozessoreinheit PROC.

Der Rest zeigt den für das Verständnis der Erfindung notwendigen Teil eines in üblicher Weise aufgebauten Mikroprozessors mit Mikroprogrammspeicher CM und Befehlsregister MIR. Letzteres liefert in an sich bekannter Weise die den Steuerungsablauf bestimmenden Steuersignale SUBF, eine gegebenenfalls notwendige Verzweigungsadresse BR-AD und die für eine Auftragserteilung an die Datenpfadsteuerung MSVR benötigten Adressen AD und Kanalpfadkennungen CHNR. Die jeweilige Mikrobefehlsadresse CM-AD wird über den Auswahlschalter MIAS aus einer von mehreren Quellen ausgesucht. Normalerweise ist das die durch einen Inkrementer INC ermittelte und im Register INCR abgespeicherte lineare Folgeadresse, die zugleich im Register PR zwischengespeichert werden kann und damit nach einem Programmaussprung als Rücksprungadresse zur linearen Programmfortsetzung zur Verfügung steht. Durch das Register JINR kann auf eine indirekt vorgegebene Programmadressse umgesteuert werden, während mit der Verzweigungsadresse BR-AD in vorbestimmter Weise verzweigt wird. Der untere Teil zeigt dagegen die eigentliche Steuereinheit mit der arithmetisch/logischen Verknüpfungseinheit ALU und den vorgeschalteten Operandenregistern AL und BL sowie dem Ergebnisregister ACU und einem Registersatz FM. Der Ausgang der arithmetisch/logischen Verknüpfungseinheit ALU und das Leitungssystems PBUS sind desweiteren über einen Auswahlschalter AWS 1 mit einem interen Leitungssystem IBUS verbindbar, über das die Register ACU, JINR, FM sowie ein Laderegister LR für den Mikroprogrammspeicher CM mit Daten geladen werden können, während an das Leitungssystem PBUS abzugebende Daten beispielsweise vom Operandenregister AL geliefert werden. An das Leitungssystem PBUS kann gegebenenfalls noch ein örtlicher Speicher angeschlossen sein, dessen Adressenregister vom internen Leitungssystem IBUS aus ladbar ist.

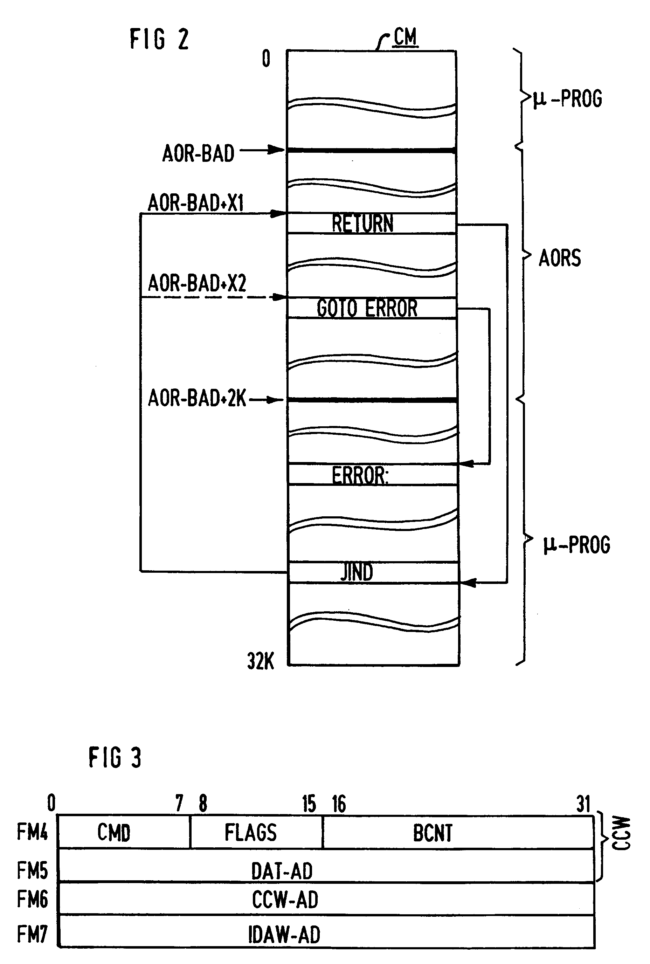

Figur 2 zeigt beispielhaft die Gliederung des Mikroprogrammspeichers CM in Auswirkung der Erfindung. Neben den eigentlichen Mikroprogrammteilen µ-PROG ist ein Teil AORS gemäß der Erfindung für die Zulässigkeitsprüfrung vorgesehen. Der Anfang dieses Bereichs ist durch eine Basisadresse AOR-BAD vorgegeben, und der jeweils einer Speicherseitengruppe zugeordnete Eintrag wird durch Addition einer entsprechenden Distanz X... erhalten. Die Größe dieses Bereichs ist von der Größe der Strukturierung des physikalischen Arbeitsspeichers abhängig. Im vorliegenden Fall umfaßt der Prüfbereich z.B. 2k Einträge, von denen dem letzten die Adresse AOR-BAD + 2k zugeordnet ist. Bei zum Beispiel 16 4-KByte-Seiten je Gruppe oder Datenblock ist damit ein Arbeitsspeicher MM mit einer maxmalen Speicherkapazität von 128 MByte überwachbar.

Sobald im Rahmen der Aufbereitung eines Kanalprogramms eine Adresse für das Holen eines Kanalbefehlswortes CCW oder einer Datentransferadresse bei indirekter Adressierung durch das Kanalbefehlswort anfällt oder eine Datentransferadresse im Rahmen des aufbereiteten Kanalprogramms zu hinterlegen ist, wird durch einen Mikrobefehl JIND eine Programmverzweigung eingeleitet, indem aus der von der jeweils realen Adresse abgeleiteten Distanz X... und der Basisadresse AOR-BAD von der arithmetisch/logischen Verknüpfungseinheit ALU die Prüfadresse AOR-BAD + X... errechnet und im Register JINR bereitgestellt wird, so daß für den nächsten Zyklus des Programmlaufes der entsprechende Eintrag im Mikroprogrammspeicher CM angesteuert wird. Weiterhin wird die lineare Folgeadresse für den auf den Verzweigungsbefehl JIND folgenden Befehlseintrag im Register PR zwischengespeichert.

Enthält der zum Beispiel mit der Adresse AOR-BAD + X1 angesteuerte Eintrag den Befehl RETURN, dann wird der unterbrochene Aufbereitungsprogrammlauf anhand der im Register PR zwischengespeicherten Adresse fortgesetzt, da die überprüfte Adresse zulässig ist. Enthält dagegen ein z.B. mit der Adresse AOR-BAD + X2 angesteuerter Eintrag die Anweisung GOTO ERROR, dann wird mit der in der Anweisung enthaltenen Verzweigungsadresse BR-AD in eine Fehlerroutine ERROR übergegangen, da die geprüfte Adresse nicht zulässig und das Aufbereitungsprogramm daher abzubrechen ist. Die Zulässigkeitsprüfung der einzelnen realen Speicheradressen ist damit in einfacher Weise in den Mikrobefehlslauf integriert.

Die jeweils zu überprüfenden realen Adressen werden vom Registersatz FM bereitgestellt, der mit der Einleitung zur Aufbereitung eines Kanalprogramms durch vom Ein-/Ausgabeprozessor IOP veranlaßte Speicherzugriffe zum Arbeitsspeicher MM in an sich bekannter Weise mit den entsprechenden Steuerdaten geladen wird. Figur 3 zeigt einen Teil des Registersatzes FM, von denen die Register FM4 und FM5 das jeweilige Kanalbefehlswort CCW, das Register FM6 die Adresse für das erste und die jeweils folgenden Kanalbefehlswörter CCW und das Register FM7 die Adresse für die zugehörige Adressentabelle der Transferadressen bei indirekter Adressierung aufnimmt. Nicht gezeigt sind die übrigen Register des Registersatzes FM, die mit weiteren für die Aufbereitung notwendigen Steuerdaten belegt werden, was aber im Hinblick auf die Erfindung ohne Bedeutung ist.

Das dargestellte Kanalbefehlswort CCW hat den üblichen Aufbau mit dem eigentlichen Operationsbefehl CMD, den Steuerbits FLAGS, einer Längenangabe BCNT und einer Adresse, die entweder die Datentransferadresse DAT-AD darstellt oder aber bei indirekter Datenwortadressierung als IDAW-AD die anzusteuernde Adressentabellle kennzeichnet.

Mit dem Start für die Aufbereitung eines Kanalprogramms wird zunächst aus dem Startinformationsblock die Adresse CCW-AD für das erste Kanalbefehlswort CCW des Känalprogramms in das Register FM6 übernommen. Im weiteren Verlauf wird dann das zugehörige Kanalbefehlswort aus dem Arbeitsspeicher angefordert, von dem die ersten vier Bytes in das Register FM4 übernommen werden. Anhand eines der Steuerbits FLAGS werden die die Adresse beinhaltenden restlichen vier Bytes des Kanalbefehlswortes entweder als DAT-AD in das Register FM5 oder bei indirekter Adressierung als IDAW-AD in das Register FM7 übernommen. Letzteres dient dann zur Anforderung der eigentlichen Datentransferadresse DAT-AD für das Register FM5.

Abhängig vom Programmlauf wird beim Auftreten Befehls JIND eines der drei Register FM5 bis FM7 angesteuert. Von der darin enthaltenen Adresse DAT-AD, CCW-AD oder IDAW-AD werden die für die Bildung der Distanz X... erforderlichen Adressenbits zum Operandenregister BL durchgeschaltet und zur vom Operandenregister AL gelieferten Basisadresse AOR-BAD addiert. Das Ergebnis AOR-BAD + X... wird dann ins Register JINR geladen und bestimmt den jeweils anzusteuernden Eintrag im Mikroprogrammspeicher CM für die Zulässigkeitsprüfung. Im vorliegenden Fall wird die Distanz von 11 Bits der jeweiligen Adresse abgeleitet, z.B. von den Bits 5 bis 12 und 17 bis 19, was 256 Datenblöcken mit je 16 4-KByte-Seiten entspricht, die auf 8 Speichermodule überlappend verteilt sind.

Die Auswahl der jeweils benötigten Adressenbits kann durch eine entsprechend einstellbare Maskensteuerung erfolgen, die zwischen dem gemeinsamen Ausgang des Registersatzes FM und dem Operandenregister BL angeordnet ist. Die Funktion der Maskensteuerung kann aber auch in eine gesonderte, weitere Steuerfunktionen ermöglichende Auswertesteuerung ADU integriert sein, die mit den Ausgängen der einzelnen Register des Registersatzes FM direkt verbunden ist.

Die Daten für die Auswahl der jeweils benötigten Datenbits richten sich nach der jeweils gültigen Abbildungsfunktion für den physikalischen Arbeitsspeicher und werden in an sich bekannter Weise von einem nicht gezeigten Serviceprozessor zur Verfügung gestellt. Dieser kann gleichfalls die Daten für die Einträge im Mikroprogrammspeicher CM liefern. Eine andere Möglichkeit besteht darin, daß die Prozessoreinheit PROC die Daten für die Einträge im gesonderten Speicherbereich AORS des Mikroprogrammspeichers (CM) selbst bereitstellt, indem sie nacheinander zu jedem Eintrag abhängig von der zugeordneten physikalischen Speicheradresse die jeweils zugehörige reale Speicheradresse ermittelt und damit einen Zugriff zum Arbeitsspeicher MM veranlaßt. Gemäß dem gewählten Ausführungsbeispiel ergeben sich die realen Speicheradressen durch stellengerechtes Einsetzen der die Distanz X... jeweils bildenden Adressenbits in eine Basisadresse des Arbeitsspeichers. Anhand der Rückmeldung der Speicherzugriffssteuereinheit MSCU kann die Prozessoreinheit dann erkennen, ob der Zugriff zulässig ist oder nicht und die entsprechenden Daten für den jeweiligen Eintrag bereitstellen.

Der Ein-/Ausgabeprozessor IOP kann somit auszuführende Kanalprogramme vorab in iher Gesamtheit oder in zusammenhängenden großen Abschnitten schrittweise aufbereiten und im Arbeitsspeicher MM hinterlegen, bis das das Kanalprogramm ausführende periphere Gerät bereit ist, so daß der eigentliche Datentransfer zwischen dem Arbeitsspeicher und dem Gerät ohne jegliche weitere Aufbereitung der Kanalbefehlswörter und ohne Prüfungen durchgeführt werden kann. Dabei ist durch die Zulässigkeitsprüfung im Ein-/Ausgabeprozessor während der Aufbereitung gewährleistet, daß bereitgestellte Datentransferadressen zulässig sind und ein aufbereitetes Kanalprogramm auch tatsächlich ausgeführt werden kann.

## Patentansprüche

1. Verfahren zur Prüfung der Zulässigkeit von direkten Speicherzugriffen in Datenverarbeitungsanlagen mit verschieden konfigurierbarem physikalischen Arbeitspeicher wobei die für den Speicherzugriff benutzte reale Speicheradresse in der Speicherzugriffsssteuerung zunächst in eine den tatsächlichen physikalischen Speicherabschnitt kennzeichnende physikalische Adresse umgewandelt wird, wenn die zugehörigen Daten im physikalischen Speicher existent sind, bevor der Speicherzugriff durchgeführt wird,
**dadurch gekennzeichnet,**
daß bei der Aufbereitung eines aus einer Folge von Kanalbefehlswörtern (CCW) bestehenden und im Arbeitsspeicher (MM) hinterlegten Kanalprogramms durch eine der Prozessoreinheiten (PROC) vor der eigentlichen Durchführung des mit dem Kanalprogramm verbundenen Datentransfers ein im Mikroprogrammspeicher (CM) der Prozessoreinheit (PROC) vorgesehener gesonderter Speicherbereich (AORS) zur Überprüfung der realen Speicheradressen auf ihre Zulässigkeit verwendet wird daß in dem gesonderten Speicherbereich (AORS) jeder möglichen physikalischen Adresse ein gesondert adressierbarer Eintrag zugeordnet wird,
daß in das im Mikroprogrammspeicher (CM) enthaltene Aufbereitungsprogramm für das Kanalprogramm zusätzliche Verzweigungsbefehle (JIND) eingefügt werden, durch die vor jeder Bereitstellung einer Speicheradresse (CCW-AD, IDAW-AD, DAT-AD) für die Ansteuerung des Arbeitsspeichers (MM) bzw. für die Ablage im Arbeitsspeicher der zugehörige Eintrag im gesonderten Speicherbereich (AORS) des Mikroprogrammspeichers (CM) angesteuert wird, und
daß abhängig vom jeweiligen Eintrag (GOTO ERROR, RETURN) entweder eine zum Abruf führende Fehlerroutine (ERROR) eingeleitet oder aber das unterbrochene Aufbereitungsprogramm fortgesetzt wird.

2. Verfahren nach Anspruch 1,
**dadurch gekennzeichnet,**
daß der Beginn des im Mikroprogrammspeicher (CM) vorgesehenen gesonderten Speicherbereichs (AORS) für die Zulässigkeitsprüfung durch eine Basisadresse (AOR-BAD) vorgegeben wird, die zur Ansteuerung eines der Einträge im gesonderten Speicherbereich (AORS) bei der Ausführung eines zusätzlichen Verzweigungsbefehles (JIND) um eine aus Adressenbits der realen Speicheradresse entsprechend der gültigen Topologie des physikalischen Arbeitsspeichers (MM) abgeleitete Distanz (X...) erhöht wird.

3. Verfahren nach Anspruch 2,
**dadurch gekennzeichnet,**
daß jeweils für eine Gruppe von zusammenhängenden Speicherabschnitten (z.B. 4-KByte-Seite) ein gemeinsamer Eintrag in dem gesonderten Speicherbereich (AORS) des Mikroprogrammspeichers (CM) verwendet wird, wobei die Gruppen durch vorgegebene Adressenbits der realen Speicheradresse festgelegt sind.

4. Verfahren nach Anspruch 2 oder 3,
**dadurch gekennzeichnet,**
daß die Bereitstellung der für die Ableitung der jeweiligen Distanz (X...) benötigten Adressenbits durch vom Serviceprozessor der Datenverarbeitunganlage entsprechend der jeweils gültigen Topologie des physikalischen Arbeitsspeichers (MM) einstellbare Auswahlschaltglieder (ADU) erfolgt.

5. Verfahren nach einem der Ansprüche 1 bis 4,
**dadurch gekennzeichnet,**
daß die Daten für die Einträge im gesonderten Speicherbereich (AORS) des Mikroprogrammspeichers (CM) abhängig von der jeweils gültigen Topologie des physikalischen Arbeitsspeichers (MM) vom Serviceprozessor der Datenverarbeitungsanlage zur Verfügung gestellt werden.

6. Verfahren nach einem der Ansprüche 1 bis 4,
dadurch gekennzeichnet,
daß die Prozessoreinheit (PROC) nacheinander zu jedem Eintrag im gesonderten Speicherbereich (AORS) des Mikroprogrammspeichers (CM) abhängig von der zugeordneten physi-` kalischen Speicheradresse die jeweils zugehörige reale Speicheradresse ermittelt und damit einen Zugriff zum Arbeitsspeicher (MM) veranlaßt und daß die Daten für den jeweiligen Eintrag im gesondert: Speicherbereich (AORS) von der Art der Rückmeldung der Speicherzugriffssteuereinheit (MSCU) des Arbeitsspeichers (MM) abgeleitet werden.
